Europäisches Patentamt

European Patent Office

Office européen des brevets

(19)

(11) **EP 1 548 573 A1**

(12) **EUROPEAN PATENT APPLICATION**

(43) Date of publication:
**29.06.2005 Bulletin 2005/26**

(51) Int Cl.7: **G06F 3/147**

(21) Application number: **03079176.8**

(22) Date of filing: **23.12.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **BARCO N.V.
8500 Kortrijk (BE)**

(72) Inventors:
• **Tanghe, Gino
  8650 Merksem (BE)**

• **Dedene, Nele
  3530 Houthalen-Helchteren (BE)**
• **Van Hille, Herbert
  Cambridge, MA 02138 (US)**
• **Thielemans, Robbie
  9810 Nazareth (BE)**

(74) Representative: **Bird, Ariane et al
Bird Goen & Co,
Klein Dalenstraat 42A
3020 Winksele (BE)**

(54) **Hierarchical control system for a tiled large-screen emissive display**

(57)    The present invention relates to a method of controlling a modular, tiled, large-screen emissive display application, e.g. an OLED display application. The method of controlling e.g. includes a first control level (214) for controlling the emissive devices, a second control level (212) for controlling the emissive display modules and a third control level for controlling the emissive display tiles (210). The number of control levels can be larger or it can be restricted to two levels. The method of controlling according to the present invention allows for similar control and calibration algorithms to be run at all levels, and allows for distributed processing in order to reduce bandwidth requirements and processing complexity. Furthermore, the control method of the present invention includes a method of operating and a method of monitoring a modular, tiled, large-screen emissive display.

Fig. 3

EP 1 548 573 A1

Printed by Jouve, 75001 PARIS (FR)

## Description

### Field of the invention

The present invention relates to a control system and method for a modular large-screen emissive display such as an organic light-emitting diode (OLED) display.

### Background of the invention

OLED technology incorporates organic luminescent materials that, when sandwiched between electrodes and subjected to a DC electric current, produce intense light of a variety of colors. These OLED structures can be combined into the picture elements, or pixels, that comprise a display. OLEDs are also useful in a variety of applications as discrete light-emitting devices or as the active element of light-emitting arrays or displays, such as flat-panel displays in watches, telephones, laptop computers, pagers, cellular phones, calculators, and the like. To date, the use of light-emitting arrays or displays has been largely limited to small-screen applications such as those mentioned above.

The market is now, however, demanding larger displays with the flexibility to customize display sizes. For example, advertisers use standard sizes for marketing materials; however, those sizes differ based on location. Therefore, a standard display size for the United Kingdom differs from that of Canada or Australia. Additionally, advertisers at trade shows need bright, eye-catching, flexible systems that are easily portable and easy to assemble/disassemble. Still another rising market for customizable large display systems is the control room industry, in which maximum display quantity, quality, and viewing angles are critical. Demands for large-screen display applications possessing higher quality and higher light output has led the industry to turn to alternative display technologies that replace older LED and liquid crystal displays, i.e. LCDs. For example, LCDs fail to provide the bright, high light output, larger viewing angles, and high resolution and speed requirements that the large-screen display market demands. By contrast, OLED technology promises bright, vivid colors in high resolution and at wider viewing angles. However, the use of OLED technology in large-screen display applications, such as outdoor or indoor stadium displays, large marketing advertisement displays, and mass-public informational displays, is only beginning to emerge.

Modular or tiled emissive displays, such as e.g. tiled OLED displays, are made from smaller modules or displays that are then combined into larger tiles. These tiled emissive displays are manufactured as a complete unit that can be further combined with other tiles to create displays of any size and shape. However, in order to handle the control algorithms for large-screen emissive displays, very complex control software with high bandwidth and a high level of processing power is required. What is needed is a less complex software control system for control and calibration of a large-screen emissive display. Furthermore, what is further needed is software control system for automatically configuring a modular, scalable, tiled emissive display.

An example of a software control system for a display is described in US-5,739,809. The system described includes a processor programmed to control and optionally also calibrate a display in response to user selection of displayed virtual controls. Preferred embodiments of the system include circuitry within the display device, which operates under control of software in response to user-entered commands for adjustment of parameters of the display device. In preferred embodiments, the processor is programmed with software that stores multiple types of data, including display parameters measured during calibration and user-specified adjustment data indicative of differences between first and second sets of display control parameters, in separate data files. The software also executes a locking operation that disables mechanical controls on the display device, periodically and automatically polls the status of the display, and automatically corrects any display parameter with a value that differs from a desired value.

Although the display calibration and control method described in US-5,739,809 provides a suitable means for controlling a display apparatus, the software control system described is very complex for use in a large-screen emissive display application.

### Summary of the invention

It is therefore an object of the invention to provide a system and method for controlling and calibrating a tiled large-screen emissive display with reduced software complexity as compared with conventional systems.

It is yet another object of this invention to provide a control system an method capable of associating and configuring multiple emissive display tiles automatically within a tiled large-screen emissive display application.

The above objectives are accomplished by a method and device according to the present invention.

The present invention relates to a method for controlling a tiled large-screen emissive display. The emissive display comprises at least a plurality of first subdivisions, each of said first subdivisions comprising a plurality of emissive devices. The method comprises

- for each of the first subdivisions, setting the emissive devices so that each of said first subdivisions is optimized with respect to a first subdivision target value for that first subdivision and
  after setting the emissive devices,
- for the emissive display, setting the first subdivisions so that said emissive display is optimized with respect to an emissive display target value for said emissive display.

In this embodiment of the method, the first subdivisions may be emissive display tiles.

The method of controlling a tiled large-screen emissive display can also comprise control on additional levels. The plurality of first subdivisions of the tiled large-screen emissive display may then be grouped into a plurality of second subdivisions, the number of first subdivisions being larger than the number of second subdivisions. Setting the first subdivisions in the method of controlling as described above may then be performed by

- for each of the second subdivisions, setting the first subdivisions so that each of said second subdivisions is optimized with respect to a second subdivision target value for that second subdivision, and
  thereafter
- for the emissive display, setting the second subdivisions so that the emissive display is optimized with respect to an emissive display target value for said emissive display.

In this embodiment of the method, the first subdivisions may e.g. refer to emissive display modules, while the second subdivisions may refer to emissive display tiles. The implementation of the first and second subdivisions may depend on the implementation of the display.

If a further level of control is introduced for a tiled large-screen emissive display wherein the plurality of second subdivisions are grouped into a plurality of further subdivisions, the number of further subdivisions being smaller than the number of second subdivisions; said setting the second subdivisions in the method of controlling may be performed by

- for each further subdivision, setting the second subdivisions so that the further subdivision is optimized with respect to a further subdivision target value for said further subdivision, and
  thereafter
- for the emissive display, setting the further subdivisions so that the emissive display is optimized with respect to an emissive display target value for said emissive display.

The further subdivisions may e.g. relate to supertiles, grouping a number of tiles e.g. each being an array of r by s tiles.

In a specific embodiment, a method is disclosed for controlling a tiled large-screen emissive display. The emissive display comprises a set of emissive display tiles, each of said emissive display tiles comprising a set of emissive display modules and each of said emissive display modules comprising a plurality of emissive display devices. The method comprises

- for each emissive display module, setting the emissive display devices so that each emissive display module is optimized with respect to a module target value for that emissive display module,
- for each emissive display tile, setting the emissive display modules taking into account the module target value for each emissive display module, so that each emissive display tile is optimized with respect to a tile target value for that emissive display tile, and
- for the emissive display, setting the emissive display tiles taking into account the tile target values for each emissive display tile so that the emissive display is optimized with respect to a display target value for that emissive display.

The emissive display can be an OLED display or any other type of emissive display. Although in the detailed description an illustration is given for controlling the tiled large-screen emissive display on three levels, i.e. devices - also called pixels - , modules and tiles, the number of levels for controlling the tiled large-screen emissive display can be larger, e.g. by introducing super tiles grouping a number of tiles e.g. each an array of r by s tiles, or even by introducing super super tiles grouping a number of super tiles. On the other hand, the number of control levels also can be limited to two levels, i.e. controlling the devices or pixels and the tiles.

In the above described methods, setting the emissive devices may comprise setting the emissive devices so that they are within 10%, preferably within 5%, most preferably within 0.8% of the first subdivision target value of that first subdivision. Furthermore setting the first subdivisions may comprise setting the first subdivisions so that they are within 10%, preferably within 5%, most preferably within 0.8% of the emissive display target value of that emissive display or within 10%, preferably within 5%, most preferably within 0.8% of the second subdivision target value of that second subdivision, depending on the number of control levels that are used in the method of controlling, i.e. depending on the presence of a set of second subdivisions wherein the plurality of first subdivisions may be grouped.

In a similar way, depending on the number of control levels, setting the second subdivisions may comprise setting the second subdivisions so that they are within 10%, preferably within 5% and most preferably within 0.8% of the emissive display target value of the emissive display or within 10%, preferably within 5% and most preferably within 0.8% of the further subdivision target value of that further subdivision. The latter occurs if the second subdivisions are grouped in a set of further subdivisions, which are themselves grouped in the emissive display.

If further subdivisions are present, setting the further subdivisions may be so that they are within 10%, more preferably within 5% and most preferably within 0.8% of the emissive display target value of the emissive display.

In case of all the above limitations are target values, the actual target value that can be reached can depend on the parameter that is chosen as the target parameter, for example, 0.8% can be achieved for the parameter brightness. This would be a severe condition, for other parameters good target level values could be higher than 0.8%.

In determining any or more of the first subdivision target value, second subdivision target value, further subdivision target value and/or emissive display target value, an environmental parameter may be taken into account. The different target values correspond with the different control levels that are introduced. This environmental parameter may be obtained by measuring a temperature of at least one emissive device, first subdivision, second subdivision or further subdivision. This also may include measuring an ambient temperature and estimating the temperature of at least one emissive device, first subdivision, second subdivision or further subdivision from the measured ambient temperature. The environmental parameter also may be any or more of ambient illumination, ambient humidity.

Determining any or more of the first subdivision target value, second subdivision target value, further subdivision target value and/or emissive display target value, may include taking into account an operating parameter stored on the first subdivision or, if present, second subdivision or further subdivision. This operating parameter may comprise any or more of age (e.g. determined by the voltage change across the emissive elements) of the first subdivision or - if present - of the second subdivision or of the further subdivision, or total ON time of the first subdivision or - if present - of the second subdivision or of the further subdivision.

Setting the emissive devices also may comprise retrieving and adjusting a control parameter.

Setting the emissive devices, the first subdivisions, the second subdivisions and the further subdivisions may also comprise using an adaptive calibration algorithm for calibrating the emissive devices, the first subdivisions, the second subdivisions and the further subdivisions. This calibration may be performed periodically. It may comprise calibration of brightness and/or color.

The invention also relates to a computer program product for executing a method of controlling a tiled large-screen emissive display according to the present invention when executed on a computing device associated with a tiled large-screen emissive display, the methods of controlling being according to the methods described above. The invention further relates to a readable data storage device storing this computer program or to the transmission of this computer program over a local or wide area telecommunications network.

The invention furthermore relates to a control unit for use with a tiled large-screen emissive display, said emissive display comprising a set of first subdivisions, each of said first subdivisions comprising a plurality of emissive devices, the control unit being adapted for controlling setting of the tiled large-screen emissive display, the control unit comprising:

- means for setting the emissive devices of each first subdivision so that each first subdivision is optimized to a first subdivision target value for that first subdivision,
- means for setting the first subdivisions of the emissive display taking into account the first subdivision target value for each first subdivision, so that the emissive display is optimized to an emissive display target value for that emissive display.

If a larger number of control levels is used, e.g. if the first subdivisions are grouped in a set of second subdivisions, the means for setting the first subdivisions may comprise

- means for setting the first subdivisions of each of the second subdivisions, taking into account the first subdivision target value for each first subdivision, so that the second subdivisions are optimized to a second subdivision target value for that second subdivision and
- means for setting the second subdivisions of the emissive display taking into account the second subdivision target values for each second subdivision, so that the emissive display is optimized to an emissive display target value for that emissive display.

The devices, first subdivisions, second subdivisions and further subdivisions may relate to emissive display pixels, emissive display modules, emissive display tiles and emissive display supertiles respectively. The number of control levels used for controlling the tiled large-screen display can be even larger, depending on the need and the size of the large-screen display. Extrapolation of the above to more control levels lies within the skills of a person skilled in the art.

These and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

**Fig. 1** is a functional block diagram of a large-screen OLED display system having a modular architecture and being suitable for use with the control system of the present invention.

**Fig. 2A** schematically illustrates the application of a multi-line method of signal and power distribution for an OLED display.

**Fig. 2B** schematically illustrates the application of a daisy-chain method of signal and power distribution for an OLED display.

**Fig. 3** illustrates a functional block diagram of an OLED display control system in accordance with an embodiment of the present invention.

**Fig. 4** illustrates a flow diagram of a method of operating a tiled OLED display using the OLED display control system according to an embodiment of the present invention.

**Fig. 5** illustrates a flow diagram of a method of monitoring a tiled OLED display using the OLED display control system according to an embodiment of the present invention.

**Detailed description of illustrative embodiments**

The present invention will be described with respect to particular embodiments and with reference to the drawings, but the invention is not limited thereto but only by the claims. The drawings are only schematic and are non-limiting. In the drawings, the size of some of the elements may be exaggerated and not drawn on scale for illustrative purposes.

The present invention relates to a control system for use with a modular, tiled, large-screen emissive display application. The control system of the present invention performs operations to initialize and configure an emissive display system during the physical assembly of emissive tiles, addresses the emissive display tiles, and controls the emissive display tiles for uniform image and proper image size. Furthermore, the control system of the present invention handles additional features, such as hot swap capability to replace failed emissive display tiles and a mechanism to detect a new emissive display tile, and video features, such as gamma curve adjustments, color point adjustments, brightness adjustments, and high broadcast capability. Based upon a known data stream, the control system determines the video content and makes adjustments accordingly. Lastly, the control system of the present invention is able to convert display deficiencies into features, i.e. compensates for deficiencies to improve display image while hiding a particular deficiency.

By way of example, the method and system for controlling a tiled large-screen emissive display system will be described with respect to a tiled large-screen OLED display system. Nevertheless, the method and system for controlling the tiled large-screen emissive display are not limited to OLED tiles but any emissive display tiles suitable for tiled large-screen emissive displays can be used.

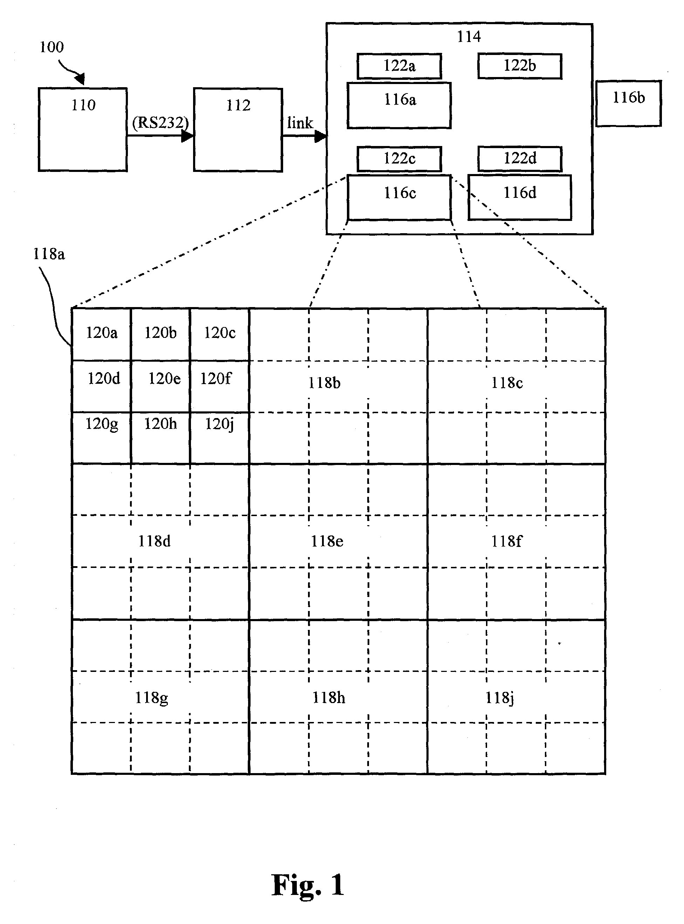

**Fig. 1** is a functional block diagram of a large-screen OLED display system **100** having a modular architecture and being suitable for use with the control system according to embodiments of the present invention. OLED display system **100** includes a system controller **110**, a digitizer **112**, and a display wall **114** that further includes a collection of OLED sub-displays **116,** for example, OLED sub-displays **116a, 116b, 116c,** and **116d.** Also shown in **Fig. 1,** as an example, is an expanded view of OLED sub-display **116c.** In this example, OLED sub-display **116c** further includes an n x m array, e.g. a 3x3 array, of OLED tiles **118.** More specifically, OLED sub-display **116c** includes OLED tiles **118a, 118b, 118c, 118d, 118e, 118f, 118g, 118h,** and **118j.** Furthermore, each of OLED tiles **118** includes a p x q array, e.g. a 3x3 array, of OLED modules **120.** More specifically, each OLED tile **118** comprises, in the example given, OLED modules **120a, 120b, 120c, 120d, 120e, 120f, 120g, 120h,** and **120j.** Additionally, each OLED module **120** further includes an array of OLED devices (not shown in detail in the drawings), i.e. for example an array of red, green, blue (RGB) pixels. In general, the 3x3 arrangements shown in **Fig. 1** are simply illustrative in nature; OLED sub-displays **116a, 116b, 116c,** and **116d** each may include any number of OLED tiles **118** and, similarly, OLED tiles **118** each may include any number of OLED modules **120**. Lastly, OLED display system **100** includes one or more ambient environment controllers (AECs) **122**, for example, AECs **122a**, **122b**, **122c,** and **122d**.

System controller **110** is representative of any standard processing device, such as a personal computer (PC), laptop, or host computer, capable of running system control software for operating OLED display system **100**. System controller **110** functions as the system-level controller of OLED display system **100**. System controller **110** may be electrically connected to digitizer **112** via a standard connector such as RS232, through which a communications link is established.

Digitizer **112** is a well-known device that converts any video signal to a digital format that can be displayed by OLED display system **100**. Digitizer **112** serves as an "input manager" for display wall **114**. Various video sources, such as those from system controller **110,** that provide signals to be displayed upon display wall **114** may be connected to digitizer **112**. Digitizer **112** converts these input signals to a digital signal that is compatible with display wall **114**.

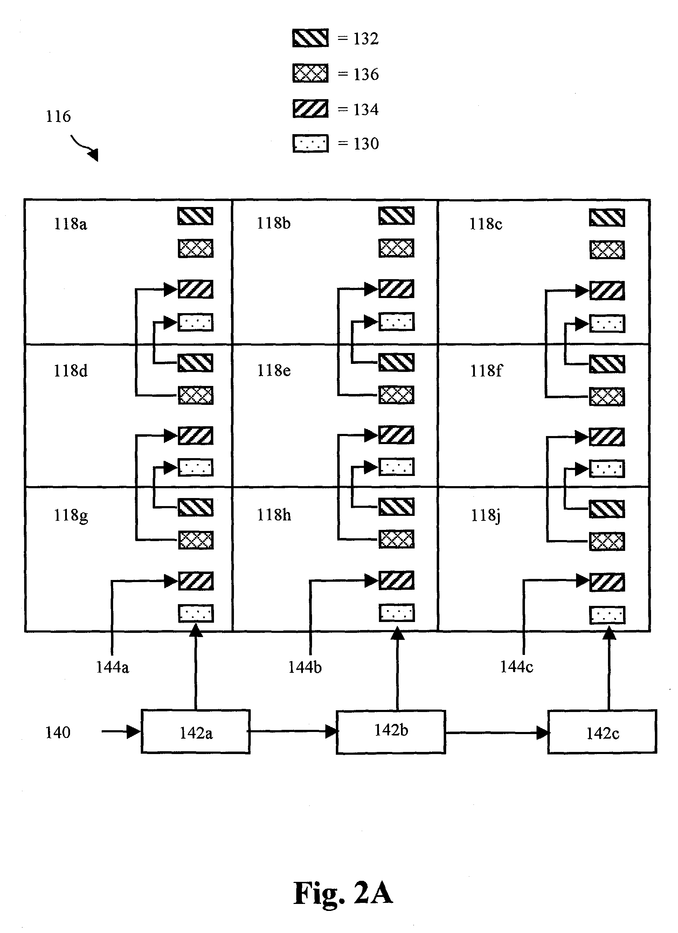

Control data signals, such as serial control data signals, from system controller **110** and video data signals, such as serial RGB video data signals, from any source are supplied to display wall **114** via digitizer **112.** The video data signals contain the current video frame information to be displayed on OLED sub-displays **116a, 116b, 116c, 116d.** The control data signals provide control information to OLED sub-displays **116a, 116b, 116c, 116d,** such as color temperature, gamma, and imaging information for each OLED tile **118** within each OLED sub-display **116**. Several methods of signal and power distribution can be used within the display wall **114**, e.g. a multi-line method, a star distribution method, or a daisy-chain method. A multi-line method of signal distribution is implemented within display wall **114,** and is illustrated in **Fig. 2A.**

A data input signal DATA IN **140** from a central processing unit (not shown) is supplied to an input of data reclocker **142a**. Data input signal **140** is representative of e.g. serial video and control data. Data reclocker **142a** subsequently re-transmits this serial video and control data to one OLED tile **118** as well as to a next data reclocker **142**, i.e. in the example given, to an input of data reclocker **142b** and to a data input connector of OLED tile **118g.** Similarly, data reclocker **142b** transmits the received serial video and control data signal to an input of data reclocker **142c** and to data input connector of OLED tile **118h.** Finally, data reclocker **142c** transmits the received serial video and control data to a data input connector of OLED tile **118j.**This way, the DATA IN signal **140** is distributed to all OLED tiles **118** of one row of the OLED sub-display **116**. It is to be noted that the data links in the OLED display are bi-directional, so it is also possible to place data reclockers **142a, 142b,** and **142c** on top of OLED sub-display **116,** instead of placing them at the bottom, thus feeding the DATA IN signal **140** to data input connectors of OLED tiles **118a, 118b, 118c**. These bi-directional links also make it possible to pass the data input signal DATA IN **140** from the end of one column to the beginning of the neighbouring column. It is likewise to be noted that the terms "row" and "column" are interchangeable, meaning that the data reclockers may distribute the DATA IN signal **140** to all OLED tiles **118** of one column of the OLED sub-display **116**.

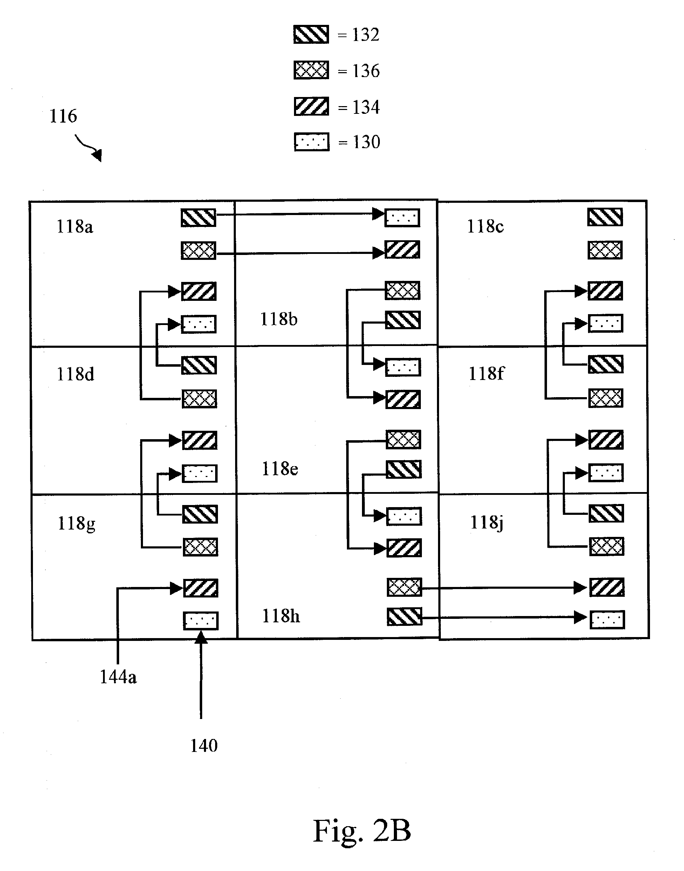

A data input connector of an OLED tile **118** provides an electrical connection for receiving video data signals containing the current video frame information to be displayed on OLED tile **118** and for receiving control data signals from data reclocker **142**. Subsequently, the video and control data is transferred from one OLED tile **118** to the next OLED tile **118** along a same column if the DATA IN signal **140** was fed to all OLED tiles **118** of a row, or to the next OLED tile **118** along a same row if the DATA IN signal **140** was fed to all OLED tile assemblies of a column. Hereinafter, the situation of **Fig. 2A** is further described, i.e. the case in which the DATA IN signal **140** was fed to all OLED tiles **118** along a same row. For example with reference to **Fig. 2,** the video and control data is transferred from OLED tile **118g** to OLED tile **118d** via an electrical connection between data output connector **132** of OLED tile **118g** and data input connector **130** of OLED tile **118d,** then from OLED tile **118d** to OLED tile **118a** via an electrical connection between data output connector **132** of OLED tile **118d** and data input connector **130** of OLED tile **118a.** Likewise, the video and control data is transferred from OLED tile **118h** to OLED tile **118e** via an electrical connection between data output connector **132** of OLED tile **118h** and data input connector **130** of OLED tile **118e,** then from OLED tile **118e** to OLED tile **118b** via an electrical connection between data output connector **132** of OLED tile **118e** and data input connector **130** of OLED tile **118b.** Lastly, the video and control data is transferred from OLED tile **118j** to OLED tile **118f** via an electrical connection between data output connector **132** of OLED tile **118j** and data input connector **130** of OLED tile **118f,** then from OLED tile **118f** to OLED tile **118c** via an electrical connection between data output connector **132** of OLED tile **118f** and data input connector **130** of OLED tile **118c.** In each case, the video and control data is retransmitted by the control board of each OLED tile **118.**

The multi-line method of power distribution is accomplished by AC power connections from one OLED tile **118** to the next OLED tile **118** along the same column or row as follows. A POWER INPUT signal **144a** from a mains power supply (not shown) is supplied to OLED tile **118g** via an electrical connection to power input connector **134** of OLED tile **118g**. AC power is then transferred from OLED tile **118g** to OLED tile **118d** via an electrical connection between power output connector **136** of OLED tile **118g** and power input connector **134** of OLED tile **118d**. AC power is then subsequently also transferred from OLED tile **118d** to OLED tile **118a** via an electrical connection between power output connector **136** of OLED tile **118d** and power input connector **134** of OLED tile **118a**. Likewise, a POWER INPUT signal **144b** from the mains power supply (not shown) is supplied to OLED tile **118h** via an electrical connection to power input connector **134** of OLED tile **118h**. AC power is then transferred from OLED tile **118h** to OLED tile **118e** via an electrical connection between power output connector **136** of OLED tile **118h** and power input connector **134** of OLED tile **118e**. AC power is then transferred from OLED tile **118e** to OLED tile **118b** via an electrical connection between power output connector **136** of OLED tile **118e** and power input connector **134** of OLED tile **118b**. Lastly, a POWER INPUT signal **144c** from the mains power supply (not shown) is supplied to OLED tile **118j** via an electrical connection to power input connector **134** of OLED tile **118j**. AC power is then transferred from OLED tile **118j** to OLED tile **118f** via an electrical connection between power output connector **136** of OLED tile **118j** and power input connector **134** of OLED tile **118f**. AC power is then transferred from OLED tile **118f** to OLED tile **118c** via an electrical connection between power output connector **136** of OLED tile **118f** and power input connector **134** of OLED tile **118c.** The AC input voltage from a power input connector **134** is simply bussed directly to power output connector **136** of the OLED tile **118**. Equally to the distribution of the DATA IN signal **140** over the OLED tiles **118,** the power distribution may be performed either column-wise or row-wise. Power input connector **134** and power output connector **136** are conventional power connectors e.g. capable of handling up to 265 AC volts and 10 amps.

An alternative distribution method for signal and power distribution is a star distribution (not represented in the drawings). The wording star distribution refers to the fact that the distribution of data signals or power occurs from the centre to the edge of the tiled OLED display **116** or vice versa. In this distribution method, the signals are transferred by a data reclocker **142** to several central OLED tile assemblies **118**, each of them further transferring the data signals to tiles at further distance of the centre or the edge respectively of the tiled OLED display **116**. In this way, distribution of serial video data and control data is obtained between the OLED tile assemblies from the centre assemblies **118** of the OLED tile display **116** to the edge assemblies **118** or vice versa, so that all OLED tile assemblies **118** obtain their part of the serial video data and control data. If preferred, it is also possible to obtain serial video data and control data transfer from edge assemblies to centre assemblies, i.e. starting at some of the edge assemblies and transferring to neighbouring assemblies ending in or around the centre of the display, so that all OLED tile assemblies **118** obtain their part of the serial video data and control data. In similar way, it is possible to obtain this method of distribution, i. e. star distribution, for the power distribution.

A third distribution method of both serial video and control data and power is illustrated in **Fig. 2B.** It shows a daisy-chain method of distribution for a tiled OLED display **116**. The tiled OLED display **116** is representative of an *m by n* array of OLED tile assemblies **118.** In this example, a 3x3 array is pictured. More specifically, **Fig. 2B** illustrates that tiled OLED display **116** includes, for example, OLED tile assemblies **118a, 118b, 118c, 118d, 118e, 118f, 118g, 118h,** and **118j**. It is further illustrated that each OLED tile assembly **118** includes its associated data input connector **130**, data output connector **132**, power input connector **134**, and power output connector **136**.

The daisy-chain distribution method of signal distribution is described as follows. A DATA IN signal **140**, representative of serial video and control data, from a central processing unit (not shown) is supplied to an input of one OLED tile assembly **118**, i.e. in the example given to data input connector **130** of OLED tile assembly **118g**. Subsequently, the serial video and control data is transferred from one OLED tile assembly **118** to a next, neighbouring OLED tile assembly **118.** For example and with reference to **Fig. 2B,** the serial video and control data is transferred from OLED tile assembly **118g** to OLED tile assembly **118d** via an electrical connection between data output connector **132** of OLED tile assembly **118g** and data input connector **130** of OLED tile assembly **118d,** then from OLED tile assembly **118d** to OLED tile assembly **118a** via an electrical connection between data output connector **132** of OLED tile assembly **118d** and data input connector **130** of OLED tile assembly **118a.** The serial video and control data is then further transferred from OLED tile assembly **118a** to OLED tile assembly **118b,** via an electrical connection between data output connector **132** of OLED tile assembly **118a** and data input connector **130** of OLED tile assembly **118b.** In similar way, the serial video data and control data are subsequently transferred from OLED tile assembly **118b** to OLED tile assembly **118e,** from OLED tile assembly **118e** to OLED tile assembly **118h,** from OLED tile assembly **118h** to OLED tile assembly **118j,** from OLED tile assembly **118j** to OLED tile assembly **118f** and from OLED tile assembly **118f** to OLED tile assembly **118c**. In similar way, the daisy-chain method of power distribution is accomplished by AC power connections from one OLED tile assembly **118** to the next OLED tile assembly **118**.

Although the latter method does not allow parallel distribution of the serial video and control data, i.e. distributing of serial video and control data occurs subsequently to a neighbouring tile, it can allow parallel, i.e. simultaneous, processing by the different OLED tile assemblies.

In Figures 2A and 2B, the same distribution method is used to distribute the power and the data. There is however no need to use the same method for data and power distribution.

The communications link between digitizer **112** and OLED sub-displays **116** of display wall **114** may be via, for example, a fibre link, which is a digital fibre optic transmission system. The fibre link may cover very long distances and has a very high bandwidth. The fibre link may transmit not only the video signals but also communication signals to display wall **114**.

Using digitizer **112**, different video input signals can be combined or overlaid. Since several sources can be connected to digitizer **112** at the same time, it is also possible to display images from several sources at display wall **114** at the same time. These images can be displayed next to each other, or they can be overlaid. The way in which the images are displayed may be edited or changed by moving and scaling "windows" in any known way. A window represents an image from a source, e.g. a video signal, that is connected to digitizer **112**. It is possible to change the position of the area upon display wall **114** in which the image is displayed, which is known as "window moving". It is also possible to change the size of the area in which the image will be displayed, which is known as "window scaling".

Display wall **114** is representative of any user-configurable, modular OLED display formed of a collection of sub-displays **116**. Display wall **114** is customizable to any size and dimension by adding or removing OLED sub-displays **116** to achieve the desired display structure. **Fig. 1** is illustrative of a sample configuration of display wall **114** that includes OLED sub-displays **116**. Furthermore, each OLED sub-display **116** may be configured differently from one another using various configurations of OLED tiles **118** and OLED modules **120** that are uniquely user-defined for any given application.

Additionally, display wall **114** is also maintainable and repairable due to its modularity. For example, an OLED module **120** that does not function properly or contains failed pixels may be replaced with another OLED module **120** by removing the non-functional OLED module **120** and inserting a new OLED module **120** into the backplane of the corresponding OLED tile **118**. Analogously, due to the modularity any OLED tile **118**, e.g. OLED tile **118a, 118b, 118c, 118d, 118e, 118f, 118g, 118h,** or **118j** that does not function properly or contains failed OLED modules **120** or failed pixels may be replaced with another OLED tile **118** by removing the non-functional OLED tile **118** and inserting a new OLED tile **118** in the respective OLED sub-display **116.** By contrast, large contiguous display systems as known from the prior art must be replaced in their entirety when portions of the display malfunction or when pixels go dark. Therefore, a modular display such as display wall **114** provides a longer display life and has lower replacement costs than conventional large single-unit displays.

Each AEC **122** is a device comprising sensors to measure the ambient environment, such as a temperature sensor, a light sensor, and a humidity sensor for example. One or more AECs **122** are placed in close proximity to display wall **114** to measure environmental parameters during the operation of display wall **114**.

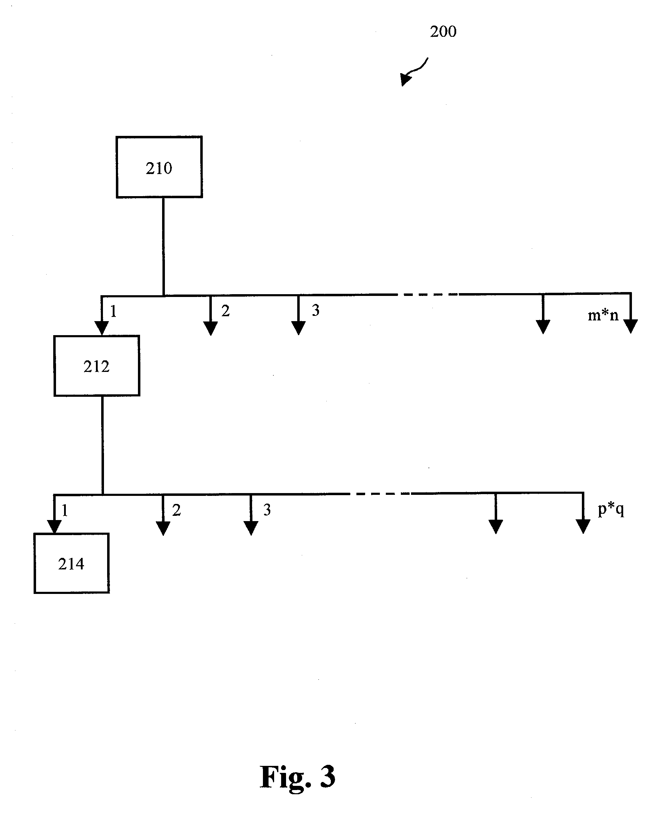

Display wall **114** of OLED display system **100** includes various levels of hardware. The highest hardware level comprises display wall **114** itself, which is formed of a plurality of sub-displays **116**; the next lower level comprises OLED sub-displays **116**, which are formed of a plurality of OLED tiles **118**; the next lower level comprises OLED tiles **118**, which are formed of a collection of OLED modules **120**; and the lowest level comprises OLED modules **120**, which are formed of a collection of individual OLED devices or pixels. The overall control according to the present invention is designed to handle the operation and calibration of the various levels of hardware of display wall **114** using similar algorithms regardless of level. Local processing is available at the fairly low level of each OLED tile **118;** thus, the overall control of OLED display system **100** according to the present invention is able to use a distributed processing method. The physical hardware implementation of OLED tiles **118** and the architecture of display wall **114** provide distributed processing that has as a result a less complex display hardware and software system, thereby avoiding the need for high-bandwidth calculations by a central processor, i.e. by system controller **110**. The overall control software is described with reference to **Fig. 3, 4** and **5.**

In an alternative embodiment, a plurality of OLED display systems **100** are networked via e.g. a conventional local area network (LAN), a wide area network (WAN), or Internet to a central processor upon which is loaded the system control software for handling all OLED display systems **100**. In this case, the function of system controller **110** of each OLED display system **100** is simply to provide a network connection to each respective digitizer **112** of the OLED display systems **100.**

**Fig. 3** illustrates a functional block diagram of an OLED display software system **200** in accordance with the present invention. OLED display software system **200** includes a system software component **210**, a tile software component **212**, and a module software component **214**.

OLED display software system **200** provides the overall software control for a modular large-screen OLED display system such as OLED display system **100**. System software component **210** is representative of the top level of software control, tile software component **212** is representative of an intermediate level of software control, and module software component **214** is representative of a low level of software control. In operation, information is passed among all levels and specific operations are distributed accordingly under the control of system software component **210**. More specifically, and with reference to **Fig. 3:**

As the top-level controller, system software component **210** performs such tasks as:

1) determining the configuration of OLED display system **100** upon initialization,

2) detecting replacement of OLED tiles **118**,
3) running adaptive calibration algorithms for OLED tiles **118**,
4) managing the temperature control of OLED tiles **118**,
5) running system diagnostics, and
6) running adaptive feature algorithms for OLED tiles **118**.

As the mid-level controller, tile software component **212** performs such tasks as:

1) running adaptive calibration algorithms for OLED modules **120,**
2) managing the temperature control of OLED modules **120,**
3) setting and storing factory settings, such as serial number and production date of OLED tiles **118**, and
4) running pre-charge control algorithms for OLED modules **120**.

As the low-level controller, module software component **214** performs such tasks as:

1) running adaptive calibration algorithms for individual OLED devices,
2) storing run-time, which is a function of ON time + temperature,
3) maintaining pre-charge control of individual OLED devices,
4) storing light and color values for individual OLED devices, and
5) setting and storing factory settings, such as serial number and production date, of OLED modules **120**.

In general, algorithms and functionality are basically the same at all levels of OLED display software system **200**. These algorithms and functions are executed by tile software component **212** and/or module software component **214**, but decisions or information gathering are typically performed at the top level of system software component **210** by passing values from one level to the next. Thus, a cluster of OLED devices, a cluster of OLED modules **120**, and a cluster of OLED tiles **118** are controlled in the same way via OLED display software system **200**.

For example, a uniform output across all OLED devices within a given OLED module **120** is ensured via the adaptive calibration, but that does not mean that a uniform output across all OLED modules **120** within a given OLED tile **118** is ensured. Subsequently, once OLED modules **120** are uniform within themselves, all OLED modules **120** outputs must further be made uniform with their neighbors within each OLED tile **118**. Likewise, once OLED tiles **118** are uniform within themselves, all OLED tiles **118** outputs must further be made uniform with their neighbors within each OLED sub-display **116** of display wall **114**. Using, for example, an adaptive calibration algorithm, the same algorithm may be run at all levels from the lowest to the highest as follows:

1) The adaptive calibration algorithm of module software component **214** reads and calibrates the OLED devices for each OLED module **120.** The x,y,Y light outputs and color coordinates are read for every OLED device. Each OLED module **120** is subsequently calibrated to optimal target OLED device x,y,Y coordinates. Values are then passed on to the next higher level, i.e., to tile software component **212**.

2) The adaptive calibration algorithm of tile software component **212** reads and calibrates every OLED module **120** for each OLED tile **118.** Each OLED tile **118** is subsequently calibrated to the optimal target OLED module **120** x,y,Y coordinates. Values are then passed on to the next higher level, i.e., to system software component **210**.

3) The adaptive calibration algorithm of system software component **210** reads and calibrates every OLED tile **118** for each OLED sub-display **116** of display wall **114**. Each OLED sub-display **116** is subsequently calibrated to optimal target OLED sub-display **116** x,y,Y coordinates of display wall **114.** In this way, a uniform image is ensured throughout the entire display wall **114**.

In the above described methods, setting the emissive devices may comprise setting the emissive devices so that they are within 10%, preferably within 5% more preferably within 0.8% of the first level target value. Furthermore setting the first level modules may comprise setting the first level modules so that they are within 10%, preferably within 5% more preferably within 0.8% of the emissive display target value of that emissive display or within 10%, preferably within 5% more preferably within 0.8% of a second level target value, depending on the number of control levels that are used in the method of controlling.

In a similar way, depending on the number of control levels, setting the second level tiles may comprise setting the second level tiles so that they are within 10%, preferably within 5% and most preferably within 0.8% of the emissive display target value of the emissive display or within 10%, preferably within 5% and most preferably within 0.8% of a third level target value.

If further levels are present, setting the further levels may be so that they are within 10%, more preferably within 5% and most preferably within 0.8% of the emissive display target value of the emissive display.

In case of all the above limitations are target values, the actual target value that can be reached can depend on the parameter that is chosen as the target parameter, for example, 0.8% can be achieved for the parameter brightness. This would be a severe condition, for other parameters good target level values could be higher than 0.8%.

An aspect of OLED display software system **200** is that it takes the environment into account. For example, by using a light sensor and a temperature sensor, OLED display software system **200** can ascertain the specific purpose, i.e. the application, e.g. inside or outside projection, of a particular display wall **114**. Based upon this knowledge, the display content of the image, i.e. gamma, contrast, brightness, and lifetime, may be adapted.

More specifically, display deficiencies may be dealt with as a feature of OLED display software system **200**. For example, if the lifetime of a particular OLED technology is known to be limited to 10,000 hours, and a full white display image, such as a spreadsheet, is desired, the light output is less important than contrast. Thus, light output may be reduced to only 20% brightness while the contrast is increased by adapting the gamma curves, thereby providing a suitable image for this application. In this case, the OLED lifetime is approximately five times the lifetime of an OLED with no brightness adjustments at all. In adjusting brightness, lifetime optimization is achieved.

The nature of the video application, e.g. spreadsheet, movie, etc., can be detected for each OLED tile **118** because each OLED tile **118** receives the full video data stream. Each OLED tile **118** uses just its portion of the video data stream to calculate and keep track of its ON time. For example, for a full white display application, such as a spreadsheet, the average display content is typically greater than 40%, while for video, the average display content is typically less than 40%. Each OLED tile **118** tracks the data it is showing; thus, system software component **210** can request information from each OLED tile **118** concerning the percentage of content displayed, can calculate, based on the information for all OLED tiles **118**, whether the content is data or video, and can then issue commands to each OLED tile **118** to adapt its settings accordingly.

As a further example, in the case of a home theatre application used in a very dark environment, the human eye has a different sense of color impression. Thus, the saturation color points may be moved. Similarly, in the case of a movie application used in daylight, the eye is not very sensitive to low light. Thus, the lowlights need not necessarily be color accurate, allowing grayscale accuracy using e.g. only three colors, to be used in the lowlight region instead of exact color.

Each AEC **122** can be assigned a certain percentage of weight, dependent on its relevance, e.g. an AEC **122** positioned next to a light spot and extremely influenced by variances of light is weighted accordingly. A percentage of weight may also be assigned to each separate sensor of a particular AEC **122**, e.g. a sensor for temperature, light, humidity. In operation, a weighted average is calculated out of all the measurements and the software responds according to a certain reaction slope. The reaction slope determines the time of response to filter out peaks in light transmission.

From the top level, to the intermediate level, to the low level, i.e. system software component **210**, tile software component **212**, and module software component **214**, respectively, OLED display software system **200** is further described as follows.

System software component **210** is generally responsible for determining the configuration of display wall **114** upon initialization; detecting replacement of OLED tiles **118**; performing adaptive calibration, diagnostics, and temperature control of OLED tiles **118**; and running an adaptive feature algorithm. A more detailed discussion of these functional capabilities follows:

*Configuration of display wall* **114**, *explained for the case where a daisy chain signal and power distribution is used:* Under the control of system software component **210**, a query of display wall **114** is performed by a simple electronic switch system. Upon system initialization, all switches are open. The first OLED tile **118** is detected and is addressed as OLED tile **118** #1. Once OLED tile **118** #1 is addressed, its switch closes automatically to close the link in the daisy chain to the next OLED tile **118**. Now the second OLED tile **118** is detected and addressed as OLED tile **118** #2, its switch closes to complete the daisy chain to the next OLED tile **118**, and so on until all OLED tiles **118** are detected and addressed. Any information that is needed at run time is extracted during the detection process, for example, the system configuration, diagnostic information, and hardware version. Other parameters queried are, for example, resolution, run time, ID or serial number, diagnostics such as temperature and power supply voltages, software version of each OLED tile **118**, factory measurement system used, and production date. OLED display software system **200** according to an embodiment of the present invention allows the flexibility of hardware of different generations to operate together. A software upgrade or downgrade on OLED tiles **118** may be necessary to ensure that each OLED tile **118** has the same software ID. For example, for compatibility, a generation *(x+1)* OLED tile **118** might have to operate as an older generation *(x)* OLED tile **118**.

*Replacement of OLED tiles* **118**: Each OLED tile **118** has an associated serial number. By reading the serial number of each OLED tile **118**, system software component **210** uniquely detects and identifies each OLED tile **118**. According to one embodiment, system software component **210** performs continuous polling, i.e., every few seconds, to detect a replacement OLED tile **118**. Alternatively, an interrupt may be generated by the action of replacing an OLED tile **118**. System software component **210** may also detect which OLED tiles **118** are operational or which may be in the process of being replaced during operation, i.e. those being hot-swapped. System software component **210** detects which OLED tile **118** is swapped. System software component **210** is able to read and store the resolution, the content, the light output, and the compensation level of the OLED tile **118** being replaced. As a result, the replacement OLED tile b is updated within seconds by means of the layering of the software.

*Adaptive calibration algorithm of OLED tiles **118**:* A distinction between the "initial calibration" that is performed before display wall **114** leaves the factory, and the "periodic calibration" that is performed every time period T is as follows:

*Initial calibration:* The brightness Y and color coordinates x, y of each OLED pixel are measured. Taking into account the target brightness and color coordinates the optimal result opt(x,y,Y), i.e. closest to the target, that can be realized with all or substantially all pixels in a module is determined. The same procedure is repeated for each OLED module **120**, within each OLED tile **118**, within each OLED sub-display **116** of display wall **114**.

This initial calibration is necessary since each OLED pixel will differ with respect to color coordinates and luminance, due to fluctuations in the production process, driver properties, power supply and/or temperature issues, etc. Without this initial calibration, there would be a non-uniform image when displaying one of the primary colors over OLED sub-display **116** or when displaying any color derived from the primary colors.

*Periodic calibration:* After every time period T, a periodic calibration is performed. This periodic calibration is based on the calculated ON time and current and temperature during that ON time, or based on the ON time and voltage changes across the OLEDs during that ON time and the temperature, the aging of each OLED pixel is determined. Digital/analog corrections are performed to compensate for the differential aging of the different OLED pixels within an OLED module **120**.

This periodic calibration is necessary to compensate for the aging that will be different for the different pixels, since the ON time and current during ON time will be different for each pixel. Without the periodic calibration, color and brightness non-uniformity's would arise during the lifetime of an initially calibrated OLED module **120.**

*Temperature control of OLED tiles **118**:* The temperature of each OLED tile **118** is monitored via an internal temperature sensor in each OLED tile **118.** Additionally, the environment temperature of the overall display wall **114** is known via the combined AECs **122**. For example, it is desirable to determine whether one specific area of display wall **114** is running hotter than the rest of display wall **114**, which is a possibility due to natural convection or, for example, because of the sun shining on that area. In such a case, some action may be needed, such as adjusting the light output of that area of display wall **114.**

*Diagnostics:* Various system health conditions are monitored at regular time intervals via system software component **210.** For example, system software component **210** monitors the availability of each OLED voltage within each OLED tile **118**, the internal heat of each OLED tile **118** to determine whether cooling fans are failing or operational, the operation of a local processor or local memory within each OLED tile **118**, and the operation of any device that is controlled via an RS232 connector or other communication protocol connector. Diagnostic information is available at all times, as OLED tiles **118** are constantly running diagnostics under the control of tile software component **212**, updating the diagnostic parameters and storing them locally. The parameters can then be read at any time by system software component **210** to determine whether any action is required. System software component **210** attempts to keep every OLED tile **118** of display wall **114** operating even if an error condition exists; display wall **114** is shut down only when necessary, thereby achieving a certain level of "fault" tolerance. For example, a failed local processor with a given OLED tile **118** does not mean that the display image is lost, it only means that the failed OLED tile **118** will not respond to further commands from system software component **210** or that certain algorithms will not run anymore. It is entirely possible for the failed OLED tile **118** to continue to run in its current state.

*Adaptive feature algorithm of OLED tiles **118**:*

Based on the environmental conditions measured by the AECs **122,** system software component **210** determines the intended application and adjusts the display brightness and/or gamma curves to obtain a better contrast and/or adjusts the fan speed, etc. System software component **210** also determines the content of the data stream. Based on the type of content the brightness or contrast can be adapted to gain video/data performance and to increase the lifetime of OLED tile **118**.

As previously stated, tile software component **212** is generally responsible for adaptive calibration algorithms and temperature control for OLED modules **120** as described above in regard to system software component **210**, setting and storing factory settings such as serial number and production date of OLED tiles **118**, or setting and storing of the window a given OLED tile **118** has to display. Furthermore, because the pre-charge operation depends on the normal working voltage across the OLED device and the capacitance of the OLED device, it is necessary to adapt the pre-charge time during the lifetime of the OLED tiles. The pre-charging is done in the current-source driver and can be adjusted by writing a value in the pre-charge time register of the current-source chip. Loading this register is done by tile software component **212.**

As previously stated, module software component **214** is generally responsible for running adaptive calibration algorithms for individual OLED devices as described above in regard to system software component **210**, storing run-time, i.e. a function of ON time plus temperature, maintaining pre-charge control of individual OLED devices, storing light and color values for individual OLED devices, and setting and storing factory settings such as serial number and production date for OLED modules **120**.

In summary, OLED display software system **200** of the present invention performs operations to initialize and configure OLED display system **100**, which includes addressing OLED tiles **118**, configuring OLED tiles **118** and controlling OLED tiles **118** for uniform image and proper image size. Furthermore, OLED display software system 200 of the present invention handles additional features, including: hot swap capability to replace failed OLED tiles **118** without having to shut down or to reset and recalibrate the entire display wall **114**; a mechanism to detect a new OLED tile **118** and to automatically address the new OLED tile **118** so that it is automatically reconfigured to produce the same image rapidly; video features such as gamma curve, the color points, and brightness adjustments; high broadcast capability; and the ability to determine the video content based upon a known data stream, then to reduce or increase the light output based upon that video content in order to gain video/data performance and to maximize lifetime of the OLEDs. Lastly, OLED display software system **200** of the present invention is able to convert display deficiencies into features, i.e. to compensate for deficiencies to improve display image while hiding a particular deficiency. An example of such compensation includes predicting and optimizing lifetime; measuring light output and temperature to set up display wall **114** to perform adequately in that environment; and adjusting gamma curve, color points, and brightness as a function of the environment.

Additionally, display software system **200** controls digitizer **112**, thereby achieving a user-defined mixing/overlaying/switching of several video/RGB input sources.

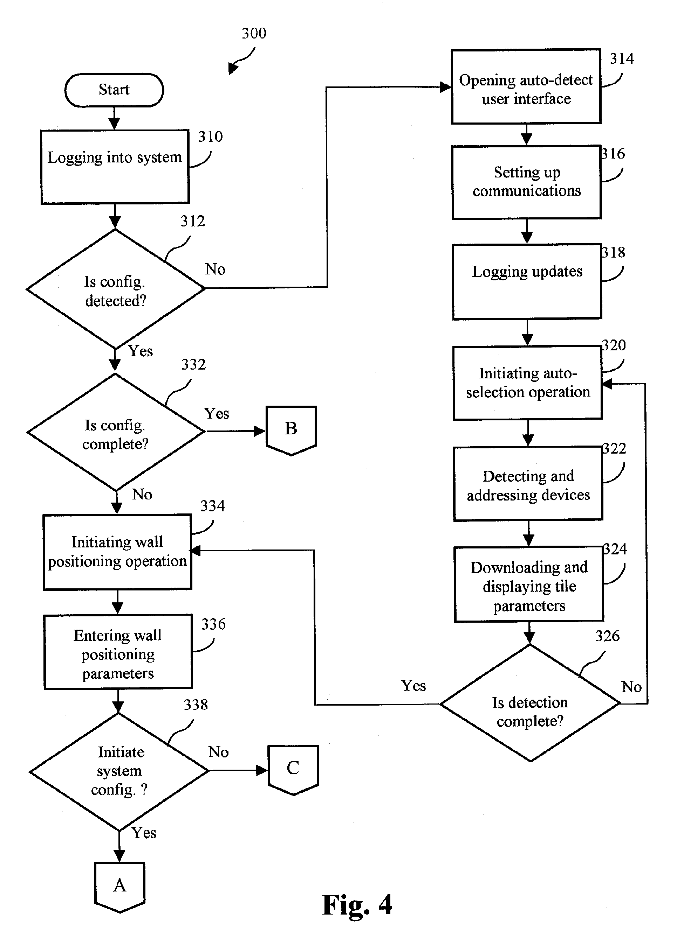

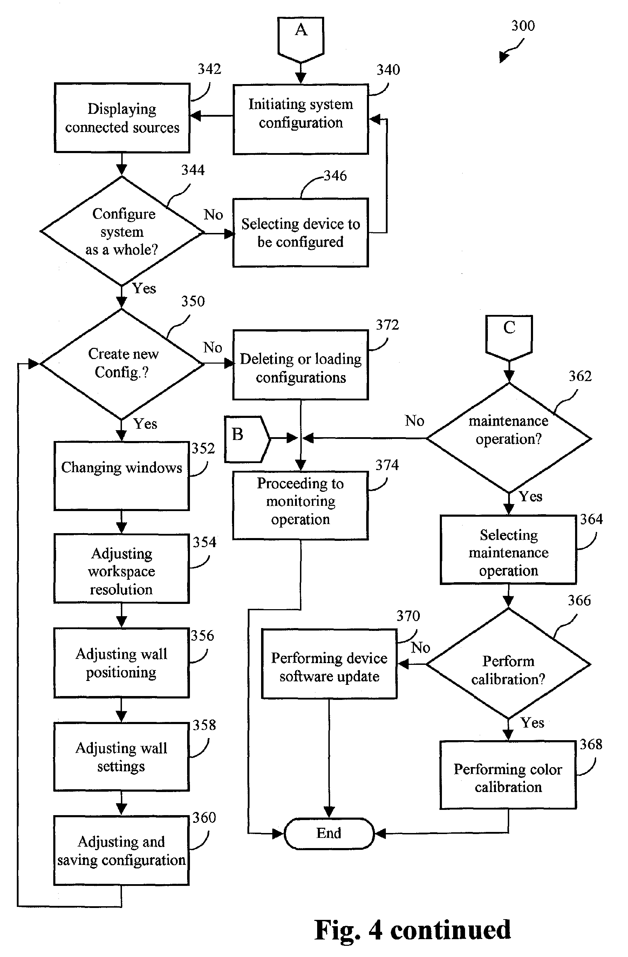

**Fig. 4** illustrates a flow diagram of a method **300** of operating a tiled OLED display using OLED display software system **200** in accordance with an embodiment of the invention. Method **300** uses OLED display system **100** of **Fig. 1** as an example display system. Furthermore, throughout the steps of method **300**, a graphical user interface (GUI) is referenced as the input/output device that facilitates the user interface; however, those skilled in the art will appreciate that other well-known interface methods, such as a command line interface, a touch screen interface, a voice-activated interface, or a menu-driven interface, may be used. Method **300** according to an embodiment of the present invention includes steps as detailed hereunder. It is to be noted that not all of those steps are required for the invention, but that some of them are optional.

*Step **310**: Logging into system*

In this step, using system controller **110,** a user logs into OLED display software system **200** of OLED display system **100** by entering a user ID and password via a GUI. Subsequently, OLED display software system **200** validates the entry, thereby granting a valid user access. Method **300** proceeds to step **312.**

*Step **312**: Is configuration detected?*

In this decision step, OLED display software system **200** interrogates a Configuration Manager of display wall **114** to determine whether a configuration associated with display wall **114** exists. If yes, method **300** proceeds to step b. If no, method **300** proceeds to step **314**.

*Step **314**: Opening auto-detect user interface*

If a configuration associated with display wall **114** does not exist, in this step, OLED display software system **200** initiates an auto-detect process by presenting an "auto-detect" GUI to the user. Method **300** proceeds to step **316.**

*Step **316**: Setting up communications*

In this step, using the "auto-detect" GUI, the user initiates a communications setup operation. Furthermore, the user initiates a process to adjust the parameter values of the communication link between system controller **110** and digitizer **112**. For example, communication port setup operation involves the selection of a serial port number, baudrate, and online/offline status, which indicates whether the software commands have effect on the system being talked to by OLED display software system **200**. When ON-LINE all commands are sent and acted on, when OFF-LINE all commands are not sent to the system devices. Method **300** proceeds to step **318.**

*Step **318**: Logging updates*

In this step, OLED display software system **200** logs and stores any changes made during step **316** within system controller **110**. Method **300** proceeds to step **320.**

*Step **320**: Initiating auto-selection operation*

In this step, using the "auto-detect" GUI, the user initiates a "start auto-selection" operation. Method **300** proceeds to step **322.**

*Step **322**: Detecting and addressing devices*

In this step, OLED display software system **200** interrogates OLED display system **100** for the presence of all attached devices, i.e. digitizer **112**, display wall **114**, OLED sub-displays **116**, OLED tiles **118**, and AECs **122**. Subsequently, all devices are addressed in the order in which they are detected in the datalink. More specifically, system controller **110** e.g. detects the presence of the various devices by systematically opening and closing switches to detect the presence and location of each device within OLED display system **100.** System controller **110** subsequently assigns each device a unique address for use in steering content and communications data to each. Method **300** proceeds to step **324.**

*Step **324**: Downloading and displaying tile parameters*

In this step, all parameters, such as type of connected devices, runtime, software-versions, and serial numbers, etc., of detected devices are downloaded to system controller **110**. Status information, such as, for example, type of devices, software-versions, and serial numbers, etc., is displayed to the user via a GUI during the downloading process. Icons of detected devices are made visible to the user via a GUI displaying an overview of OLED display system **100**. Method **300** proceeds to step **326.**

*Step **326**: Is detection complete?*

In this decision step, OLED display software system **200** determines whether the device detection process has been successfully completed by determining whether the number of detected devices corresponds with the expected number of devices, i.e. user gets information of detected devices on the GUI; user knows if none are missing, and whether the software is not able to download all parameters of all connected devices. Otherwise the detection cannot be completed successfully. If yes, method **300** proceeds to step **334**. If no, method **300** returns to step **320.**

*Step **332**: Is configuration complete?*

In this decision step, OLED display software system **200** determines whether the configuration of display wall **114** is complete. When the configuration is known and the wall positioning is already entered, the configuration is considered as complete. Thus, OLED display software system **200** simply checks whether the wall positioning is already known or not. If yes, method **300** proceeds to step **374**. If no, method **300** proceeds to step **334.**

*Step **334**: Initiating wall positioning operation*

This step is also carried out when previously a configuration associated with display wall **114** did not exist, and has been detected in the mean time. In this step, using a GUI displayed upon system controller **110**, the user initiates a "wall positioning" process for positioning display wall **114** in the total video output field. Subsequently, OLED display software system **200** initiates the wall positioning process for display wall **114** by presenting a "wall positioning" GUI to the user. Method **300** proceeds to step **336.**

*Step **336**: Entering wall positioning parameters*

In this step, using the "wall positioning" GUI, the user enters pixel coordinates of the upper left corner of display wall **114**, resolution of OLED tiles **118**, linkage direction, etc. Subsequently, OLED display software system **200** logs and stores the window parameters, i.e. horizontal and vertical start- and stop- pixel coordinate, of each OLED tile **118** within the system controller **110**. Method **300** proceeds to step **338.**

*Step **338**: Initiate system configuration?*

In this decision step, the user decides whether he/she wishes to initiate a system configuration process. If yes, method **300** proceeds to step **340**. If no, method **300** proceeds to step **362.**

*Step **340**: Initiating system configuration*

In this step, using a GUI displayed upon system controller **110,** the user initiates a system configuration process for configuring all OLED sub-displays **116** and OLED tiles **118** of display wall **114**. Subsequently, OLED display software system **200** initiates the system configuration process for display wall **114** by presenting a "system configuration" GUI to the user. Method **300** proceeds to step **342.**

*Step **342**: Displaying connected sources*

In this step, OLED display software system **200** initiates the windowing process in digitizer **112** by presenting a "windowing" GUI to the user, through which all video sources connected via digitizer **112** are visibly displayed to the user with relation to display wall **114.** Method **300** proceeds to step **344.**

*Step **344**: Configure system as a whole?*

In this decision step, the user decides whether he or she wishes to configure OLED display system **100** in its entirety. If yes, method **300** proceeds to step **350**. If no, method **300** proceeds to step **346.**

*Step **346**: Selecting device to be configured*

In this step, using a GUI displayed upon system controller **110,** the user selects digitizer **112,** display wall **114,** the connection between the display wall **114** and the digitizer **112,** e.g. a Fiberlink, i.e. a fiber-interface to connect display wall **114** to digitizer **112** at a long distance, or an AEC **122** to be configured. If digitizer **112** is selected, the user initiates actions relating to digitizer **112**, such as adjusting digitizer settings, adjusting timings of the sync generator, selecting input slots, etc. If display wall **114** is selected, the user initiates actions relating to display wall **114**, such as adjusting type, adjusting measurement system, adjusting contrast, adjusting flicker, adjusting mode, adjusting resolution mode, adjusting gamma, adjusting wall positioning, adjusting OLED tiles **118**, etc. If the connection, e.g. Fiberlink, is selected, the user initiates actions relating to the connection, such as adjusting status, type, motion of the transmitter and the receiver, adjusting the settings of a reconstruction filter, etc. If an AEC **122** is selected, the user initiates actions relating to the given AEC **122**, such as adjusting its settings, e.g. weight, calibration value and status of sensors. After the selected device has been configured, method **300** returns to step **340.**

*Step **350**: Create new configuration?*

In this decision step, the user decides whether he/she wishes to create a new configuration for OLED display system **100**. If yes, method **300** proceeds to step **352**. If no, method **300** proceeds to step **372**.

*Step **352**: Changing windows*

In this step, using the "windowing" GUI, the user makes any desired changes relating to the connected video sources with regard to the locations where their images are displayed, i.e. windows. For example, the user may choose one or more of the following operations: move windows, scale windows, adjust Z-order or layering scheme of the windows in relation to one another, adjust aspect ratio, select input, select special source-specific actions, e.g. visible, color key, alpha blending, etc., or change a selection of the image ViewPort. ViewPort refers to a positional point on the input image with X and Y coordinates and its associated horizontal distance W and vertical distance H, so it defines a ViewPort or *cutout image* specific to that input. The ViewPort can be changed by changing the values of X, Y, W, H..

Method **300** proceeds to step **354.**

*Step 354: Adjusting workspace resolution*

In this step, using a GUI displayed upon system controller **110,** the user adjusts the size of the resolution of the work area. The user may adjust the size of the workspace resolution by either zooming in or out of the window and display boxes. The width and height aspect ratio change simultaneously according the adjustments, e.g., an 800x600 resolution can be converted to 520x390 in the workspace area. Method **300** proceeds to step **356.**

*Step 356: Adjusting wall positioning*

In this decision step, using the "wall positioning" GUI displayed upon system controller **110**, the user adjusts the wall positioning of display wall **114**. It is possible to adjust the horizontal and vertical start positions of the display in the work area. It is also possible to adjust the horizontal and vertical resolution of every display tile. Changes can be made from the tile's maximum displayable resolution to values below that maximum. This is quite useful when trying to fill extremely large walls with small source images, as reducing the resolution per tile expands the image. Method **300** proceeds to step **358.**

*Step 358: Adjusting wall settings*

In this step, using the "wall settings" GUI displayed upon system controller **110,** the user adjusts the settings of display wall **114**, such as contrast, flicker, and gamma. Method **300** proceeds to step **360.**

*Step 360: Adjusting and saving configuration*

In this step, using a GUI displayed upon system controller **110**, the user initiates a configuration management operation for display wall **114**. The user may save the setup of display wall **114** in configuration files, which contain all the settings of OLED display system **100**. The user may save or recall as many configurations as requested. By downloading a configuration to display wall **114**, all the settings, such as positioning, flicker, and contrast, are updated immediately. Method **300** returns to step **350.**

*Step 362: Maintenance operation?*

In this decision step, the user decides whether he or she wishes to initiate a maintenance operation upon OLED display system **100**. If yes, method **300** proceeds to step **364**. If no, method **300** proceeds to step **374.**

*Step 364: Selecting maintenance operation*

In this step, using a GUI displayed upon system controller **110,** the user initiates the maintenance operation, such as for example a software/firmware update for all connected devices or a color calibration adjustment, for OLED display system **100**. Subsequently, OLED display software system **200** initiates the maintenance operation for OLED display system **100** by presenting a "maintenance" GUI to the user. Method **300** proceeds to step **366.**

*Step 366: Perform calibration?*

In this decision step, the user decides whether he or she wishes to initiate a calibration operation upon OLED display system **100**. If yes, method **300** proceeds to step **368**. If no, method **300** proceeds to step **370.**

*Step 368: Performing color calibration*

In this step, using the "maintenance" GUI displayed upon system controller **110,** the user defines the color temperature and selects the range of OLED tiles **118** to be calibrated. It is possible to calibrate the entire display wall **114** or to calibrate only a range of OLED tiles **118.** For example, calibrating only OLED tiles **118** with addresses ranging from 4 to 7. Subsequently, the user initiates a color calibration operation upon display wall **114** and OLED display software system **200** performs the color calibration operation upon the selected OLED tiles **118** of display wall **114**. The color calibration reads all color measurements, i.e. measurements done at the factory and stored in each OLED tile **118**, and aging factors of all OLED tiles **118**, and uses these to calculate correction values, which then are sent to OLED tiles **118,** resulting in a uniform image. Method **300** ends.

*Step **370**: Performing device software update*

In this step, using a GUI displayed upon system controller **110,** the user initiates a device software update operation for OLED display system **100** and further selects the specific device to be updated. Subsequently, OLED display software system **200** initiates the device software update operation for OLED display system **100** by presenting an "update software" GUI to the user. The user then selects the update files and OLED display software system **200** performs the device software update operation. In this step it is possible to update the software/firmware of all the connected devices. Using a GUI displayed upon system controller **110**, the user selects the device icon for which the software has to be updated and places the update files in the appropriate directory. Method **300** ends.

*Step **372**: Deleting or loading configurations*

In this step, using the "configuration manager" GUI displayed upon system controller **110**, the user either deletes or loads configurations relating to OLED display system **100**. In step **360**, the defined configuration was saved. In the same way it is possible that configurations have been saved during previous display configurations. These older configurations may now be loaded or they can be deleted. Method **300** proceeds to step **374**.

*Step **374**: Proceeding to monitoring operation*

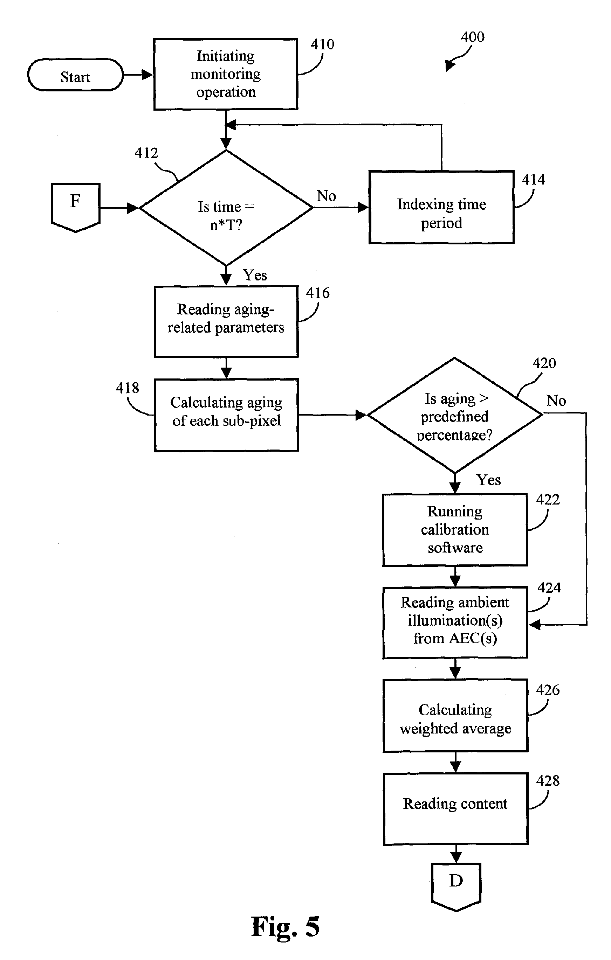

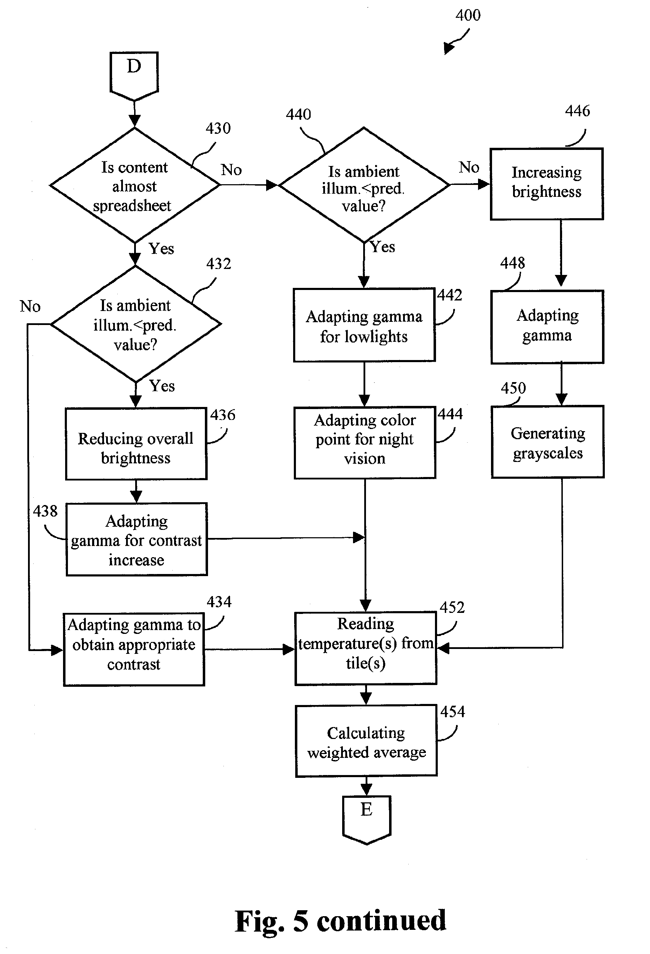

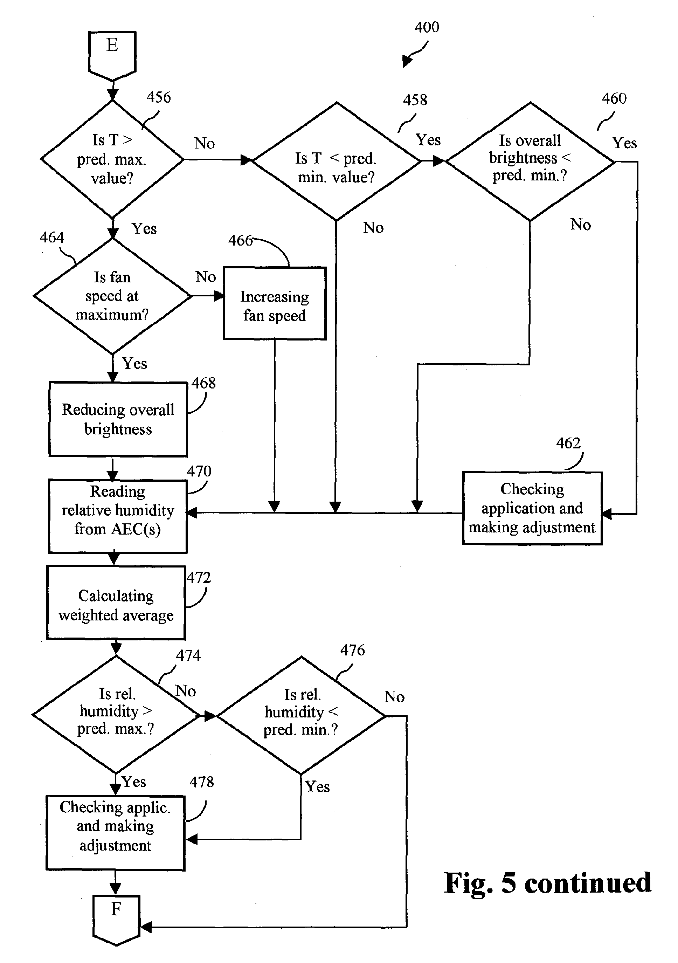

In this step, using a GUI displayed upon system controller **110,** the user initiates a system monitoring operation for OLED display system **100**. Subsequently, OLED display software system **200** initiates the system monitoring operation for OLED display system **100** by presenting a "monitoring" GUI to the user. Full details of the system monitoring operation are found in reference to a method **400** of **Fig. 5;** however, a summary of the system monitoring operation is provided as follows.

Using the "monitoring" GUI displayed upon system controller **110**, the user views the settings for AECs **122**. The user may perform the following tasks:

adjust various settings, e.g., the minimum/maximum contrast, the ambient temperature range, the ambient illumination range, the reaction slope, and the interval;
adjust settings for AECs **122**, e.g., the weight and status of each AEC **122**;
adjust the application for OLED display system **100**, e.g., home theatre, control rooms, and events; or
start or stop the system monitoring operation.

OLED display software system **200** of OLED display system **100** periodically, i.e. the period is determined by a specified interval, reads the temperature, content, ambient illumination, aging, and relative humidity relating to display wall **114**. OLED display software system **200** performs adjustment depending on the parameter values. Method **300** ends.

**Fig. 5** illustrate a flow diagram of a method **400** of monitoring a tiled OLED display using OLED display software system **200** in accordance with an embodiment of the invention. Method **400** uses OLED display system **100** of **Fig. 1** as an example display system. Generally, the software control system of OLED display system **100** periodically reads the temperature, content, ambient illumination, aging, and relative humidity relating to display wall **114**, and then performs adjustments depending on the parameter values according to method **400**.

Furthermore, throughout the steps of method **400**, a GUI is referenced as the input/output device that facilitates the user interface; however, those skilled in the art will appreciate that other well-known interface methods, such as a command line interface, a touch screen interface, a voice-activated interface, or a menu-driven interface, may be used. Method **400** includes the following steps:

*Step **410**: Initiating monitoring operation*

In this step, using a GUI displayed upon system controller **110,** the user initiates a system monitoring operation for OLED display system **100**. Subsequently, OLED display software system **200** initiates the system monitoring operation by presenting a "monitoring" GUI to the user, who defines a time period T for monitoring OLED display system **100.** Method **400** proceeds to step **412.**

*Step **412**: Is time = n\*T?*

In this decision step, OLED display software system **200** determines whether a predetermined time interval *n\*T* has elapsed since the last system monitoring operation was performed; where n is an integer number: n = 1, 2, 3, and where *T* is a predefined period of time. The monitoring actions will be performed every time that a time period T has elapsed. If yes, method **400** proceeds to step **416**. If no, method **400** proceeds to step **414**.

*Step **414**: Indexing time period*

In this step, OLED display software system **200** indexes the time period by, for example, five minutes. Method **400** returns to step **412.**

*Step **416**: Reading aging-related parameters*

In this step, OLED display software system **200** reads aging-related parameters, such as ON time, current during ON time, voltage across the OLED, temperature, color measurements, from a local storage of each OLED tile **118**. Method **400** proceeds to step **418.**

*Step **418**: Calculating aging of each sub-pixel*

In this step, OLED display software system **200** calculates the aging of each red, green, and blue sub-pixel within each pixel of each OLED module **120** of each OLED tile **118** of each OLED sub-display **116** of display wall **114**. The comparison of the initial voltage across the OLED device and measured voltage across the OLED device is an indication for the aging of the OLED device. The ON time and current during the ON time allows calculating the total charge that passed through the OLED device. This total charge is also a measure for the aging of the OLED devices. Also the temperature, measured on regular basis, has an influence on the aging. Method **400** proceeds to step **420.**

*Step **420**: Is aging > predefined percentage?*

In this decision step, OLED display software system **200** determines whether the aging calculated in step **418** is greater than a predefined percentage for any given sub-pixel. If yes, method **400** proceeds to step **422.** If no, method **400** proceeds to step **424.**

*Step **422**: Running calibration software*

In this step, OLED display software system **200** performs a calibration operation upon the target sub-pixel(s). More specifically, after every time period T, a periodic calibration is performed. The calibration is based on the aging of each OLED. This aging of each OLED is determined based on the calculated ON time and current and temperature during that ON time or based on the ON time and voltage changes across the OLEDs and the temperature during that ON time. Digital/analog corrections are performed to compensate for the differential aging of the different OLED pixels within an OLED module **120**. This periodic calibration is necessary to compensate for the aging that will be different for the different pixels, since the ON time and current during ON time will be different for each pixel. Without the periodic calibration color and brightness non-uniformities would arise during the lifetime of an initially calibrated OLED module **120**. Method **400** proceeds to step **424.**

*Step **424**: Reading ambient illumination(*s*) from AEC(*s*)*

In this step, OLED display software system **200** reads the ambient illumination(s) from AECs **122** mounted within display wall **114.** The measured ambient illumination level is used in steps **432** and **440** to allow making appropriate gamma/brightness changes in order to optimize the display performance. Method **400** proceeds to step **426.**

*Step **426**: Calculating weighted average*

In this step, OLED display software system **200** calculates the weighted average of the ambient illumination levels measured by the various light sensors of the various AECs **122** by taking into account the weight of each AEC **122** and the weight of each light sensor within each AEC **122**. For example, assume that two AECs **122** are placed next to display wall **114,** assume that the first AEC **122** has a weight of X% and the second AEC **122** has a weight of Y%, e.g. it is possible that X is much smaller than Y if the first AEC **122** is positioned next to a light spot, and assume that each AEC **122** has four light sensors, with the following measured values and weights:

|  |  | Value (lux) | Weight (%) |
|---|---|---|---|
| First AEC **122** | Sensor 1a | a1 | Wa1 |
|  | Sensor 1b | b1 | Wb1 |
|  | Sensor 1c | c1 | Wc1 |
|  | Sensor 1d | d1 | Wd1 |
| Second AEC **122** | Sensor 2a | a2 | Wa2 |
|  | Sensor 2b | b2 | Wb2 |
|  | Sensor 2c | c2 | Wc2 |
|  | Sensor 2d | d2 | Wd2 |

The weighted average can than be calculated as:

$$WeightedAverage = \frac{X\%.\dfrac{a1.Wa1+b1.Wb1+c1.Wc1+d1.Wd1}{4} + Y\%.\dfrac{a2.Wa2+b2.Wb2+c2.Wc2+d2.Wd2}{4}}{2}$$

Method **400** proceeds to step **428.**

*Step **428**: Reading content*

In this step, OLED display software system **200** reads the content type of the displayed video from the input data stream for determining the nature of the application. Method **400** proceeds to step **430.**

*Step **430**: Is content almost "spreadsheet"?*

In this decision step, by analyzing the content read in step **428,** OLED display software system **200** determines whether the content is almost "spreadsheet", i.e. is nearly a full white image. If full white operations are represented by a "power factor = 1" and video operation can be represented by a "power factor = 1/8 = 0.125", nearly a full white image refers to an image having a power factor equal to or larger than 0.56. If yes, method **400** proceeds to step **432.** If no, method **400** proceeds to step **440.**

*Step **432**: Is ambient illumination < predefined value?*

In this decision step, by analyzing the ambient illumination(s) read in step **424,** OLED display software system **200** determines whether the ambient illumination is less than a predefined value of, for example, **200** lux. If yes, method **400** proceeds to step **436**. If no, method **400** proceeds to step **434**.

*Step 434: Adapting gamma to obtain appropriate contrast*

In this step, OLED display software system **200** runs algorithms to adapt the gamma curve of each OLED module **120** to obtain appropriate contrast by selecting another gamma preset curve or by changing one or more of ten points that define the current gamma curve. The gamma value is a curve defined by ten points, i.e. one starting slope point, one ending slope point and four x, y coordinate points in between and is used to convert the 8-bit digitized RGB data into a 16-bit value. In this way 256 different input values can be transformed to 65536 output values; a linear input can be converted to any non-linear output which corresponds better with the human eye sensitivity. This output is used by CCD controller to control the ON time of the current sources. An appropriate choice of the gamma curves allows to improve the display performance, e.g. to improve the contrast in the high-lights. There are several gamma preset curves to choose from. It is also possible to construct another gamma by moving one or more of the four pairs that define the gamma curve. Method **400** proceeds to step **452.**

*Step **436**: Reducing overall brightness*

In this step, if the ambient illumination is less than a predetermined value, OLED display software system **200** reduces the overall brightness of display wall **114** by reducing the brightness of each primary emitter by the same percentage. The purpose of this operation is to increase the lifetime of display wall **114**, and to prevent display wall **114** from emitting too much light in a dark environment. For example, at night, watching a very bright display wall **114** is not comfortable to the eye for viewing. Each color in display wall **114** can be described by its tristimulus values X, Y, Z in the CIE color space. The Y value represents contributions to the brightness perception of the human eye and it is called the brightness or luminance. A color can also be described by Y and the color functions x, y, z; where

$$x = \frac{X}{X + Y + Z} \; , \; y = \frac{Y}{X + Y + Z} \; , \; z = \frac{Z}{X + Y + Z} \; ,$$

and $x + y + z = 1$.

In this step the brightness of each primary color $Y_R$, $Y_B$, and $Y_G$ is decreased by a percentage factor, for example 10%. The overall brightness of display wall **114** will therefore decrease by the same percentage factor. Method **400** proceeds to step **438.**

*Step **438**: Adapting gamma for contrast increase*

In this step, OLED display software system **200** runs algorithms to adapt the gamma curve of each OLED module **120** to obtain appropriate contrast by selecting another gamma preset curve or by changing one or more of a plurality of points, e.g. ten points, that define the current gamma curve. In this case a gamma curve is selected that gives rise to an increased contrast in a dark environment. Method **400** proceeds to step **452**.

*Step **440**: Is ambient illumination < predefined value?*

In this decision step, carried out when the content read in step **428** is not nearly a full white image i.e. if the image has a power factor lower than 0.56, by analyzing the ambient illumination(s) read in step **424**, OLED display software system **200** determines whether the ambient illumination is less than a predefined value of, for example, **200** lux. If yes, method **400** proceeds to step **442.** If no, method **400** proceeds to step **446.**

*Step **442**: Adapting gamma for lowlights*

In this step, OLED display software system **200** runs algorithms to adapt the gamma curve of each OLED module **120** for improved display performance at lowlights by selecting another gamma curve. See step **434** for more details. Method **400** proceeds to step **444.**

*Step **444**: Adapting color point for night vision*

In this step, OLED display software system **200** runs algorithms to adapt the color point of each OLED module **120** for night vision. In a dark environment, the color impression is different. Therefore, the saturation color point needs to be moved to improve the color reproduction on display wall **114.** Method **400** proceeds to step **452.**

*Step **446**: Increasing brightness*

In this step, carried out when the ambient illumination is not smaller than a predetermined value, OLED display software system **200** runs algorithms to increase the brightness of display wall **114** by increasing the brightness of each primary emitter by the same percentage. In this step the brightness of each primary color $Y_R$, $Y_B$, and $Y_G$ is increased by a percentage factor, for example 10%. The overall display brightness will therefore increase by the same percentage factor. As a result of this action, the performance of display wall **114** will increase, but the lifetime of display wall **114** will decrease. Method **400** proceeds to step **448.**

*Step **448**: Adapting gamma*

In this step, OLED display software system **200** runs algorithms to adapt the gamma curve of each OLED module **120** to increase the contrast by selecting another gamma curve. See step **434** for more details. Method **400** proceeds to step **450.**

*Step **450:** Generating grayscales*

In this step, OLED display software system **200** runs algorithms to generate grayscales of each pixel within each OLED module **120** within each OLED tile **118** within each OLED sub-display **116** of display wall **114** using e.g. the three primary colors of the pixels. The purpose of this operation is to increase the lifetime of display wall **114**. In a bright environment, display wall **114** does not have to be color accurate, but display wall **114** has to be grayscale accurate. As a consequence, the three colors can be used to generate the gray scales. Method **400** proceeds to step **452.**

*Step **452:** Reading temperature(s) from tile(s)*

In this step, OLED display software system **200** reads the temperature(s) from OLED tiles **118.** The temperature has a serious influence on the lifetime of OLED tiles **118.** It is a rule of thumb that the display lifetime decreases by a factor of two for every temperature raise of 10 °C. The knowledge of the temperature allows appropriate actions to be taken to limit the aging of the OLED devices within OLED tiles **118**, as shown in steps **464, 466** and **468.** Method **400** proceeds to step **454.**

*Step **454:** Calculating weighted average*

In this step, OLED display software system **200** calculates the weighted average of the temperature measured in OLED tiles **118.** Method **400** proceeds to step **456.**

*Step **456:** Is temperature > predefined max. value?*

In this decision step, by analyzing the weighted average temperature calculated in step **454**, OLED display software system **200** determines whether the temperature is larger than a predefined maximum value of, for example, 35 °C. If yes, method **400** proceeds to step **464**. If no, method **400** proceeds to step **458**.

*Step **458:** Is temperature < predefined min. value?*

In this decision step, by analyzing the weighted average temperature calculated in step **454**, OLED display software system **200** determines whether the temperature is less than a predefined minimum value of, for example, 25 °C. If yes, method **400** proceeds to step **460.** If no, method **400** proceeds to step **470.**

*Step **460:** Is overall brightness level < predefined min. value?*

In this decision step, by analyzing the brightness of display wall **114,** OLED display software system **200** determines whether the overall brightness level of display wall **114** is less than a predefined minimum value of, for example, 100 nit. If yes, method **400** proceeds to step **462.** If no, method **400** proceeds to step **470.**

*Step **462:** Checking application and making adjustment*

In this step, OLED display software system **200** verifies the application in which display wall **114** is being used and makes adjustments. For example, in a home theatre application in a bright environment the brightness of display wall **114** may be increased in order to increase the performance. Example applications include home theatre, control rooms, events, etc. Method **400** proceeds to step **470.**

*Step **464:** Is fan speed maximum?*

In this decision step, OLED display software system **200** determines whether cooling fans within each OLED tile **118** are operating at its maximum speed by checking the voltage used to drive the cooling fans. If yes, method **400** proceeds to step **468**. If no, method **400** proceeds to step **466.**

*Step **466:** Increasing fan speed*

In this step, OLED display software system **200** issues commands to increase the operating speed of cooling fans within one or more targeted OLED tiles **118**. It is to be noted that adjusting of the fan-speed is normally done independently within each OLED tile **118** without control of system controller **110**. Method **400** proceeds to step **470**.

*Step **468**: Reducing overall brightness*

In this step, OLED display software system **200** reduces the overall brightness of display wall **114** by reducing the brightness of each primary emitter by the same percentage. The purpose of this operation is to increase the lifetime of display wall **114.** In this step the brightness of each primary color $Y_R$, $Y_B$, and $Y_G$ is decreased by, for example, 10%. The overall brightness of display wall **114** will therefore decrease by the same percentage. Method **400** proceeds to step **470.**

*Step **470**: Reading relative humidity from AEC(s)*

In this step, OLED display software system **200** reads the relative humidity from AECs **122** mounted within display wall **114**. In an environment with a high relative humidity the lifetime of the OLED devices will be shorter than the lifetime of OLED devices in an environment with a very low relative humidity. The knowledge of the relative humidity allows the appropriate actions to be taken in order to increase the lifetime of display wall **114**, such as in case of very high relative humidity; and to improve the performance of display wall **114** in the case of a very low relative humidity. Method **400** proceeds to step **472.**

*Step **472**: Calculating weighted average*

In this step, OLED display software system **200** calculates the weighted average of the relative humidity measured by the different humidity sensors of the different AECs **122** by taking into account the weight of each AEC **122** and the weight of each humidity sensor within each AEC **122**. The calculation is analogous to the calculation described in step **426,** apart from the fact that the a1, b1, c1, d1, a2, b2, c2 and d2 are now the relative humidity values in %. Method **400** proceeds to step **474.**

*Step **474**: Is relative humidity > predefined max. value?*

In this decision step, by analyzing the weighted average relative humidity calculated in step 472, OLED display software system 200 determines whether the relative humidity is greater than a predefined maximum value of, for example, 80%. If yes, method **400** proceeds to step **478.** If no, method **400** proceeds to step **476.**

*Step **476**: Is relative humidity < predefined minimum value?*

In this decision step, by analyzing the weighted average relative humidity calculated in step **472**, OLED display software system **200** determines whether the relative humidity is less than a predefined minimum value of, for example, 20%. If yes, method **400** proceeds to step **478.** If no, method **400** returns to step **412.**

*Step **478**: Checking application and making adjustment*

In this step, OLED display software system **200** verifies the application in which display wall **114** is being used and makes adjustments, such as increasing the brightness if relative humidity is very low and if this is useful for the application. If the relative humidity is very high, actions will be taken to reduce the aging of the OLED devices, e.g. by decreasing the overall brightness. If the relative humidity is very low, actions will be taken to increase the performance of display wall **114**, e.g. increase brightness or do nothing but just benefit from the reduced aging due to the low humidity. Example applications include home theatre, control rooms, events, etc. Method **400** returns to step **412**.

**Claims**

1.  A method for controlling a tiled large-screen emissive display (100), said emissive display (100) comprising at least a plurality of first subdivisions, each of said first subdivisions comprising a plurality of emissive devices, said method comprising

    -   for each of the first subdivisions, setting the emissive devices so that each of said first subdivisions is optimized with respect to a first subdivision target value for that first subdivision, and
        after setting the emissive devices,
    -   for the emissive display (100), setting the first subdivisions so that said emissive display is optimized with respect to an emissive display target value for said emissive display (100).

2. A method according to the previous claim, said plurality of first subdivisions being grouped into a plurality of second subdivisions, wherein said setting the first subdivisions is performed by

   - for each of the second subdivisions, setting the first subdivisions so that each of said second subdivision is optimized with respect to a second subdivision target value for that second subdivision, and thereafter
   - for the emissive display (100), setting the second subdivisions so that the emissive display is optimized with respect to an emissive display target value for said emissive display (100)

3. A method according to claim 2, said plurality of second subdivisions being grouped into a plurality of further subdivisions, wherein said setting the second subdivisions is performed by

   - for each further subdivision, setting the second subdivisions so that the further subdivision is optimized with respect to a further subdivision target value for said further subdivision, and after setting said second subdivisions
   - for the emissive display (100), setting the further subdivisions so that the emissive display is optimized with respect to an emissive display target value for said emissive display (100)

4. A method according to claim 1, wherein said first subdivision is an emissive display tile (118).

5. A method according to any of claims 2 or 3, wherein said first subdivision is an emissive display module (120) and said second subdivision is a display tile (118).

6. A method according to claim 3, wherein said further subdivision is an emissive display supertile.

7. The method according to any of the previous claims, wherein for each first subdivision, setting the emissive devices comprises setting the emissive devices so that they are within 10%, preferably within 5% and most preferably within 0.8% of the first subdivision target value of that first subdivision.

8. The method according to any of claims 1, 4 or 7, wherein for said emissive display (100), setting the first subdivisions comprises setting the first subdivisions so that they are within 10%, preferably within 5% and most preferably within 0.8% of the emissive display target value of that emissive display (100).

9. The method according to any of claims 2, 5 or 7, wherein setting the first subdivisions comprises setting the first subdivisions so that they are within 10%, preferably within 5% and most preferably within 0.8% of the second subdivision target value of that second subdivision and wherein setting the second subdivisions comprises setting the second subdivisions so that they are within 10%, preferably within 5% and most preferably within 0.8% of the emissive display target value of the emissive display (100).

10. The method according to any of claims 3, 5, 6 or 7, wherein setting the first subdivisions comprises setting the first subdivisions so that they are within 10%, preferably within 5% and most preferably within 0.8% of the second subdivision target value of that second subdivision, and wherein setting the second subdivisions comprises setting the second subdivisions so that they are within 10%, preferably within 5% and most preferably within 0.8% of the further subdivision target value of that further subdivision, and wherein setting the further subdivisions comprises setting the further subdivisions so that they are within 10%, preferably within 5% and most preferably within 0.8% of the emissive display target value of the emissive display target value.

11. The method according to any of the previous claims, wherein in determining any or more of the first subdivision target value, second subdivision target value, the further subdivision target value and/or emissive display target value, an environmental parameter is taken into account.

12. The method according to claim 11, wherein the environmental parameter is obtained by measuring a temperature of at least one emissive device, first subdivision, second subdivision or further subdivision .

13. The method according to any of claims 11 or 12, wherein taking into account the environmental parameter includes measuring an ambient temperature and estimating the temperature of at least one emissive device, first subdivision, second subdivision or further subdivision from the measured ambient temperature.

14. The method according to any of claims 11 to 13, wherein the environmental parameter is any or more of ambient illumination, ambient humidity.

15. The method according to any of the previous claims, wherein in determining any or more of the first subdivision target value, second subdivision target value, further subdivision target value and/or emissive display target value, an operating parameter stored on the first subdivision or second subdivision or further subdivision is taken into account.

16. The method according to claim 15, wherein the operating parameter comprises any or more of age of the first subdivision or of the second subdivision or of the further subdivision, or total ON time of the first subdivision or of the second subdivision or of the further subdivision.

17. The method according to any of the previous claims, wherein setting the emissive devices comprises retrieving and adjusting a control parameter.

18. The method according to any of the previous claims, wherein setting the emissive devices, the first subdivisions, the second subdivisions and the further subdivisions comprises an adaptive calibration algorithm for calibrating the emissive devices, the first subdivisions, the second subdivisions and the further subdivisions.

19. The method according to claim 18, wherein the calibration is performed periodically.

20. The method according to any of claims 18 or 19, wherein said calibration comprises calibration of brightness and/ or color.

21. A computer program product for executing any of the methods as claimed in claims 1 to 20 when executed on a computing device associated with a tiled large-screen emissive display (100).

22. A machine readable data storage device storing the computer program product of claim 21.

23. Transmission of the computer program product of claim 21 over a local or wide area telecommunications network.

24. A control unit for use with a tiled large-screen emissive display (100), said emissive display (100) comprising a set of first subdivisions, each of said first subdivisions comprising a plurality of emissive devices, the control unit being adapted for controlling setting of the tiled large-screen emissive display (100), the control unit comprising:

- means for setting the emissive devices of each first subdivision so that each first subdivision is optimized to a first subdivision target value for that first subdivision,
- means for setting the first subdivisions of the emissive display (100) taking into account the first subdivision target value for each first subdivision, so that the emissive display (100) is optimized to an emissive display target value for that emissive display (100).

25. A control unit according to claim 24 for use with a tiled large-screen emissive display (100), said first subdivisions being grouped in a set of second subdivisions, the means for setting the first subdivisions comprising

- means for setting the first subdivisions of each of the second subdivisions, taking into account the first subdivision target value for each first subdivision, so that each second subdivision is optimized to a second subdivision target value for that second subdivision,
- means for setting the second subdivisions of the emissive display (100) taking into account the second subdivision target values for each of the second subdivisions, so that the emissive display (100) is optimized to an emissive display target value for that emissive display (100).

**Fig. 1**

**Fig. 2A**

Fig. 2B

200

210

212

1    2    3    m*n

214

1    2    3    p*q

# Fig. 3

300

**Start**

Logging into system — 310

Is config. detected? — 312
No → Opening auto-detect user interface — 314
Yes ↓

Setting up communications — 316

Logging updates — 318

Initiating auto-selection operation — 320

Detecting and addressing devices — 322

Downloading and displaying tile parameters — 324

Is config. complete? — 332
Yes → B
No ↓

Initiating wall positioning operation — 334

Entering wall positioning parameters — 336

Initiate system config. ? — 338
No → C
Yes ↓

A

Is detection complete? — 326
Yes → (to Initiating wall positioning operation)
No → (to Initiating auto-selection operation)

**Fig. 4**

**Fig. 4 continued**

Start → Initiating monitoring operation — 410

400

412

F → Is time = n*T? — No → Indexing time period — 414

Yes

Reading aging-related parameters — 416

418 — Calculating aging of each sub-pixel → Is aging > predefined percentage? — 420 — No

Yes

Running calibration software — 422

Reading ambient illumination(s) from AEC(s) — 424

Calculating weighted average — 426

Reading content — 428

D

**Fig. 5**

400

**D**

430 Is content almost spreadsheet

No → 440 Is ambient illum.<pred. value?

No → 446 Increasing brightness

Yes ↓

432 Is ambient illum.<pred. value?

No →

Yes ↓

436 Reducing overall brightness

Yes ↓

442 Adapting gamma for lowlights

448 Adapting gamma

438 Adapting gamma for contrast increase

444 Adapting color point for night vision

450 Generating grayscales

434 Adapting gamma to obtain appropriate contrast

452 Reading temperature(s) from tile(s)

454 Calculating weighted average

**E**

# Fig. 5 continued

400

E

456 — Is T > pred. max. value? — No → 458 — Is T < pred. min. value? — Yes → 460 — Is overall brightness < pred. min.? — Yes

Yes ↓

464 — Is fan speed at maximum? — No → 466 — Increasing fan speed

458 No ↓

460 No ↓

Yes ↓ (464)

468 — Reducing overall brightness

462 — Checking application and making adjustment

470 — Reading relative humidity from AEC(s)

472 — Calculating weighted average

474 — Is rel. humidity > pred. max.? — No → 476 — Is rel. humidity < pred. min.? — No

Yes ↓ (474)

478 — Checking applic. and making adjustment

476 Yes ↓

F

**Fig. 5 continued**

**European Patent Office**

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 396 257 A (INOUE FUMIO ET AL) 7 March 1995 (1995-03-07) * column 4, line 37 - line 59 * | 1,4,7,8, 17,21-24 | G06F3/147 |
| Y | * column 5, line 8 - line 37; figures 1,3,4 * --- | 2,5,9,25 | |
| X | US 6 219 011 B1 (LIVNI AVINOAM ET AL) 17 April 2001 (2001-04-17) * column 11, line 36 - column 12, line 18; figure 18 * --- | 1 | |
| Y | US 2003/090455 A1 (DALY SCOTT J) 15 May 2003 (2003-05-15) * paragraphs [0023],[0024]; figures 1,2 * --- | 2,5,9,25 | |
| A | DEUTSCHES INSTITUT FÜR NORMUNG E V: "Regelungtechnik und Steuerungstechnik" DIN 19226, XX, XX, 28 February 1994 (1994-02-28), pages 2-15, XP002199756 * paragraph [2.5.3] * --- | 18 | |
| A,D | US 5 739 809 A (SIGNA JOHN C ET AL) 14 April 1998 (1998-04-14) * figure 1 * ----- | 1 | TECHNICAL FIELDS SEARCHED (Int.Cl.7) G06F G09G |

The present search report has been drawn up for all claims

| Place of search | Date of completion of the search | Examiner |
|---|---|---|
| MUNICH | 24 May 2004 | Gundlach, H |

EPO FORM 1503 03.82 (P04C01)

**ANNEX TO THE EUROPEAN SEARCH REPORT
ON EUROPEAN PATENT APPLICATION NO.**

EP 03 07 9176

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2004

| Patent document cited in search report | | Publication date | Patent family member(s) | | Publication date |
|---|---|---|---|---|---|
| US 5396257 | A | 07-03-1995 | JP | 3287007 B2 | 27-05-2002 |
| | | | JP | 5173523 A | 13-07-1993 |
| | | | KR | 9508134 B1 | 25-07-1995 |
| | | | JP | 3092304 B2 | 25-09-2000 |
| | | | JP | 5150730 A | 18-06-1993 |
| US 6219011 | B1 | 17-04-2001 | IL | 119259 A | 06-12-2000 |
| US 2003090455 | A1 | 15-05-2003 | NONE | | |
| US 5739809 | A | 14-04-1998 | US | 5570108 A | 29-10-1996 |
| | | | US | 5499040 A | 12-03-1996 |
| | | | WO | 9600435 A1 | 04-01-1996 |

For more details about this annex : see Official Journal of the European Patent Office, No. 12/82